# EUROPÄISCHE PATENTSCHRIFT

(11) **EP 1 108 862 B1**
(45) Veröffentlichungstag und Bekanntmachung des Hinweises auf die Patenterteilung: **13.09.2006**
(21) Anmeldenummer: 00126406.8
(22) Anmeldetag: 05.12.2000
(51) Int. Cl.: F01N 3/035, F01N 11/00, F01N 9/00, F02D 21/08, F02D 41/02, F01N 3/023, F02D 35/00, B01D 53/94

(54) **Verfahren und Vorrichtung zum Reduzieren schädlicher Bestandteile im Abgas einer Brennkraftmaschine**
Method and apparatus for reducing harmful constituents of exhaust gas of a combustion engine
Procédé et dispositif pour diminuer les constituants nocifs de gaz d'échappement dans un moteur à combustion

(30) Priorität: 17.12.1999 DE 19961166
(43) Veröffentlichungstag der Anmeldung: 20.06.2001
(73) Patentinhaber: Volkswagen Aktiengesellschaft, 38436 Wolfsburg (DE)
(72) Erfinder: Pott, Ekkehard, Dr., 38518 Gifhorn (DE); Weidmann, Kurt, Dipl.-Ing., 38444 Wolfsburg (DE)

(56) Entgegenhaltungen:
- EP-A- 0 879 946
- WO-A-99/09307
- COOPER B J ET AL: "ROLE OF NO IN DIESEL PARTICULATE EMISSION CONTROL" DEVELOPMENTS IN DIESEL PARTICULATE CONTROL SYSTEMS, WARRENDALE, PA, US, 1989, Seiten 171-183, XP000889454
- PATENT ABSTRACTS OF JAPAN vol. 2000, no. 03, 30. März 2000 (2000-03-30) & JP 11 336530 A (NISSAN MOTOR CO LTD), 7. Dezember 1999 (1999-12-07)

## Beschreibung

Die Erfindung bezieht sich auf ein Verfahren und eine Vorrichtung zum Reduzieren schädlicher Bestandteile im Abgas einer Brennkraftmaschine und betrifft insbesondere die Partikelregeneration einer kontinuierlich arbeitenden Partikelminderungsvorrichtung.

Es ist bekannt, zur Verminderung der Partikelemission bei Brennkraftmaschinen, insbesondere Diesel-Brennkraftmaschinen, einen Partikelfilter zu benutzen, der in der Abgasleitung angeordnet ist und die Partikel aus dem durch die Abgasleitung strömenden Abgas filtert. Hierbei werden die Partikel im Partikelfilter zurückgehalten, wo sie sich ansammeln. Diese Ansammlung der Partikel wird als Beladung des Partikelfilters bezeichnet. Diese Beladung führt dazu, daß sich der Partikelfilter mit der Zeit zusetzt und regeneriert werden muß, was durch ein Frei- bzw. Abbrennen der Partikel am Filter erfolgen kann. Die Zündtemperatur von Ruß, aus dem die Partikel hauptsächlich bestehen, liegt bei Partikelfiltern üblicherweise etwa im Bereich von über 550° C.

Es ist bereits ein sogenanntes CRT-System (Continuously Regenerating Trap) vorgeschlagen worden (z.B. WO 99/09307), bei dem es sich um eine kontinuierlich reduzierende Partikelminderungsvorrichtung handelt, die einen vorgeschalteten Oxidationskatalysator und einen nachgeschalteten Partikelfilter in der Abgasleitung umfaßt. Am Oxidationskatalysator wird die anströmenden NOx-Rohemissionen der Brennkraftmaschine, die vorwiegend in Form von NO vorliegen, zunächst zu NO₂ oxidiert. Das NO₂ ist als starkes Oxidationsmittel dann in der Lage, die im Partikelfilter festgehaltenen Partikel zu oxidieren, wobei NO₂ wieder zu NO reduziert wird. Bei einem hinreichend hohen NO₂-Angebot wird eine befriedigende Partikelverminderung erreicht. Es findet jedoch nahezu keine NOx-Verminderung statt, wobei der an sich schädliche Bestandteil NOx dazu ausgenutzt wird, die Partikel im Partikelfilter zu oxidieren.

Ferner ist bekannt, den NOx-Anteil im Abgas durch eine NOx-Minderungsvorrichtung zu senken, z.B. durch eine Anhebung einer Abgas-Rückführungsmenge, jedoch ergibt sich hierbei folgendes Problem. Wird beim Einsatz einer kontinuierlich arbeitenden Partikelminderungsvorrichtung die NOₓ₋Rohemission beispielsweise durch eine Abgas-Rückführungsmenge soweit gemindert, daß gewünschte Grenzwerte für NOₓ eingehalten werden können, kann im Abgas vor dem Partikelfilter nicht mehr genügend NO₂ vorliegen, um eine vollständige Umsetzung des Partikelmassenstroms zu gewährleisten. Eine zunehmende Beladung des Partikelfilters ist damit nicht auszuschließen. Bei sehr hohen Beladungsmengen im Partikelfilter steigt der Abgasgegendruck an, so daß neben einem Kraftstoff-Mehrverbrauch sogar ein Absterben der Brennkraftmaschine droht. Überdies besteht dann bei sehr starker Erwärmung des Partikelfilters die Gefahr der Selbstzündung der Partikel. Bei entsprechend hohen gespeicherten Partikelmengen kann deren unkontrolliertes Abbrennen zu einer Zerstörung des Partikelfilters führen.

Der Erfindung liegt die Aufgabe zugrunde, ein Verfahren zur Regeneration des Partikelfilters einer kontinuierlich arbeitenden Partikelminderungsvorrichtung sowie eine entsprechende Abgasreinigungsvorrichtung zu schaffen, mit denen beispielsweise die neue europäische Abgasnorm EU-IV eingehalten wird.

Diese Aufgabe wird durch die Merkmale des Verfahrens nach Anspruch 1 sowie der Vorrichtung nach Anspruch 8 gelöst. Bevorzugte Ausführungsformen der Erfindungen sind Gegenstand der Unteransprüche.

Den erfindungsgemäßen Lösungen liegt die Erkenntnis zugrunde, daß die Beladung des Partikelfilters eine bestimmte Zeit in Anspruch nimmt und die Zeit bis zu einem bestimmten oder kritischen Beladungsgrad dazu ausgenutzt werden kann, den NOx-Anteil zu verringern, wodurch das Abgas eine umweltfreundlichere Qualität erhält.

Das Verfahren nach Anspruch 1 und die Vorrichtung nach Anspruch 8 eignen sich für eine Rohemission, deren NOx-Anteil so niedrig ist, daß nach der Umwandlung von NOx zu NO₂ ein zu geringes NO₂-Angebot vorhanden ist, um die Partikel im Filter zu oxidieren. Deshalb wird der Beladungsgrad im Partikelfilter mit dem eingangs beschriebenen Nachteil zunehmen, wobei jedoch in diesem Funktionsbereich ein Abgas mit einem weit verminderten NOx-Anteil die Vorrichtung verläßt. Wenn der Beladungsgrad einen bestimmten oder kritischen Wert angenommen hat, wird der NOx-Anteil in der Rohemission vergrößert. Hierdurch wird ein erhöhtes NO₂-Angebot im Partikelfilter bereitgestellt, um den Partikelanteil im Partikelfilter zu senken, wobei diese Senkung größer ist als der Partikeleintrag, so daß der Beladungsgrad wieder verringert wird. Das erhöhte NO- bzw. NOx-Angebot kann gewährleistet werden, beispielsweise durch eine Absenkung einer Abgasrückführungsrate, durch Vorverlagerung des Spritzbeginns der Haupteinspritzung oder durch Änderung von Menge und Beginn einer Voreinspritzung. Während dieses Funktionszyklusses weist das Abgas einen etwas höheren NOx-Anteil auf. Wenn der Beladungsgrad sich verringert, z.B. auf einen bestimmten Wert, kann der NOx-Anteil in der Rohemission wieder verringert werden, wobei in diesem Funktionszyklus das Abgas einen geringeren NOx-Anteil aufweist.

Die erfindungsgemäße Vorrichtung ist außerdem von einfacher und kostengünstig herstellbarer Bauweise, die sich in einfacher Weise steuern läßt und funktionssicher arbeitet.

Nachfolgend werden die Erfindung bzw. weitere erfindungsgemäße Funktionskriterien und Maßnahmen sowie durch sie erzielbare Vorteile anhand eines weiteren Ausführungsbeispiels und einer Zeichnung näher erläutert. Es zeigen
- Fig. 1: eine Brennkraftmaschine mit einer erfindungsgemäßen Vorrichtung zum Reduzieren von schädlichen Bestandteilen im Abgas der Brennkraftmaschine in schematischer Darstellung; und
- Fig. 2: eine Modellierung eines abgewandelten Ausführungsbeispiels.

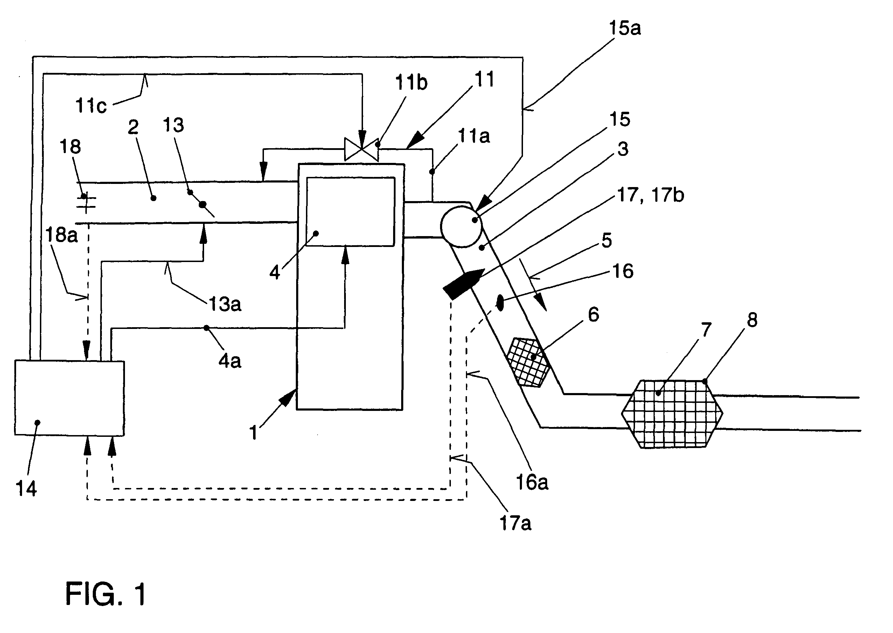

Fig. 1 zeigt die Brennkraftmaschine 1, insbesondere eine Diesel-Brennkraftmaschine, mit mehreren Zylindern, zu denen sich eine Luftansaugleitung 2 und von denen sich eine Abgasleitung 3 in an sich bekannter Weise erstrecken. Der Brennkraftmaschine 1 sind nicht dargestellte Kraftstoff-Einspritzventile einer Kraftstoff-Einspritzvorrichtung 4 zugeordnet. Die Zylinder werden durch direkte Einspritzung mit Kraftstoff aus den Einspritzventilen und mit Verbrennungsluft durch die Luftansaugleitung 2 in einem einstellbaren bestimmten Kraftstoff/Luft-Verhältnis versorgt, wodurch der Verbrennungsbetrieb gewährleistet ist.

Die Zylinder sind durch nicht dargestellte Zweigleitungsabschnitte mit der gemeinsamen Abgasleitung 3 verbunden, die von dem von der Brennkraftmaschine 1 ausgestoßenen Abgas in der mit einem Pfeil 5 bezeichneten Strömungsrichtung 5 durchströmt wird. In der Abgasleitung 3 ist ein Partikelminderungssystem mit einem Oxidationskatalysator 6 angeordnet. In der Strömungsrichtung 5 hinter dem Oxyidationskatalysator 6 ist in der Abgasleitung 3 ein Partikelfilter 7 in einem Gehäuse 8 angeordnet.

Der Brennkraftmaschine 1 ist eine Abgasrückführvorrichtung 11 zugeordnet, die eine die Brennkraftmaschine 1 umgehende Rückführleitung 11a aufweist, die von der Abgasleitung 3 in der Strömungsrichtung 5 hinter der Brennkraftmaschine, gegebenenfalls hinter einer verstellbaren Abgasdrossel 12, abzweigt und in der Strömungsrichtung 5 vor der Brennkraftmaschine 1 mit der Luftansaugleitung 2 verbunden ist und zwar in der Strömungsrichtung 5 hinter einer Drosselklappe 13 in der Luftansaugleitung 2. In der Rückführleitung 11a ist ein verstellbares AbgasRückführventil 11 b angeordnet, mit dem die Rückführmenge des Abgases steuerbar oder regelbar ist, und das durch eine Steuerleitung 11c mit einer allgemein mit 14 bezeichneten elektronischen Steuereinrichtung verbunden ist, die einen zentralen Prozessor (CPU) aufweist. Die Drosselklappe 13 ist ebenfalls durch eine Steuerleitung 13a und gegebenenfalls auch Signalleitung mit der Steuereinrichtung 14 verbunden.

Der Brennkraftmaschine 1 ist ein an sich bekannter Turbolader 15 zugeordnet, der andeutungsweise im Übergangsbereich zwischen der Brennkraftmaschine 1 und der Abgasleitung 3 dargestellt und durch eine sich von der elektronischen Steuereinrichtung 14 zu ihm erstreckenden Steuerleitung 15a ansteuerbar ist. In der Abgasleitung 3 sind in der Strömungsrichtung 5 vor dem Oxidationskatalysator 6 ein Temperatursensor 16 und ein Gasdrucksensor 17 angeordnet, die durch Signalleitungen 16a, 17a mit der elektronischen Steuereinrichtung 14 verbunden sind. Vorzugsweise ist der Drucksensor 17 dem Temperatursensor 16 in der Strömungsrichtung 5 vorgeordnet.

Der Drucksensor 17 ist Teil einer Meßvorrichtung 17b, mit der der Druck in der Abgasleitung 3 in der Strömungsrichtung 5 vor dem Oxidationskatalysator 6 und hinter dem Turbolader 15 feststellbar ist, wobei ein dem jeweiligen Gasdruck entsprechendes Drucksignal erzeugt wird, das mittels der Signalleitung 17a der Steuer- oder Regeleinrichtung 14 übermittelt wird und von dieser als Istwert für die Steuerung oder Regelung benutzt wird.

Alternativ kann der Abgasgegendruck durch eine Messung der Frischluftmasse bei geöffnetem Abgasrückführventil 11b ermittelt werden. Hierzu ist in der Luftansaugleitung 2 in der Strömungsrichtung 5 vorzugsweise vor der Drosselklappe 13 ein Hitzdraht 18 eines Luftmassenmessers angeordnet, der durch eine Signalleitung 18a mit der Steuer- oder Regeleinrichtung 14 verbunden ist, die dessen Signale als Istwert benutzt.

Mit der Bezugszahl 4a ist eine sich zur Einspritzvorrichtung 4 erstreckende Steuerleitung bezeichnet, über die die Einspritzvorrichtung 4 zwischen Einstellungen vor, haupt (mittel) und nach durch die Steuer- oder Regeleinrichtung 14 einstellbar ist.

Nachfolgend wird das Verfahren zur Reduzierung der schädlichen Bestandteile im Abgas beschrieben. Aufgrund entsprechender Maßnahmen, beispielsweise der Motorsteuerung oder durch eine entsprechende EGR-Rate reicht der NOx-Anteil des Abgases nach der Umwandlung des NO im Oxidationskatalysator 6 zu NO₂ nicht aus, um die am Partikelfilter 7 gesammelten Partikel in einem so starken Maße zu reduzieren, daß die Reduktion der Partikel größer ist als der Partikeleintrag. Folglich wird der Partikelfilter 7 zunehmend beladen, wobei der Gasgegendruck in der Abgasanlage 2 vor dem Partikelfilter 7 steigt. Dies wird durch die Abgasdruck-Meßvorrichtung 17b überwacht. Wenn der Abgasgegendruck einen bestimmten oder kritischen Wert übersteigt, wird der NOx-Gehalt des Rohabgases durch geeignete Maßnahmen erhöht, so daß die Reduzierung der gefilterten Partikel größer ist als der Partikeleintrag. Wenn der Gasgegendruck dann wieder unter einen bestimmten Wert fällt, wird NOx-Gehalt wieder verringert.

Im Rahmen der Erfindung kann das aus der Brennkraftmaschine 1 ausgestoßene Abgas einen NOₓ-Anteil enthalten, der dem vorbeschriebenen abgesenkten Wert ohne eine NOx-Verminderungsvorrichtung entspricht. In einem solchen Fall wird dann, wenn der Beladungsgrad am Partikelfilter 7 eine obere Schwelle erreicht, der NOx-Anteil in der Abgasrohemission durch eine entsprechende Maßnahme auf einen Wert erhöht, der eine Reduzierung der Partikel im Partikelfilter gewährleistet. Wenn dann der Abgasgegendruck wieder auf einen bestimmten Wert fällt, d.h. die Beladung des Partikelfilters unterhalb einer vorbestimmten Schwelle gefallen ist, wird die NOx-Erhöhung wieder zurückgenommen und so fort.

Im Rahmen der Erfindung kann die Vergrößerung des NOx-Anteils durch eine Absenkung der Abgas-Rückführrate, durch Vorverlagerung des Spritzbeginns der Haupteinspritzung, oder durch Änderung von Menge und Beginn der Voreinspritzung erreicht werden.

Zur Verstärkung der Partikelminderung ist es sinnvoll, oberhalb einer applizierbaren Schwelle der ermittelten Partikelfilterbeladung und oberhalb einer applizierbaren Schwelle der Abgas- und/oder Partikelfiltertemperatur ein erhöhtes NOx- bzw. NO-Angebot bereitzustellen, um die im Partikelfilter 7 eingelagerte Partikelmasse stärker zu senken als der Partikeleintrag.

Die Einsatzschwelle, d.h. die obere Schwelle der Partikelfilterbeladung, für NO-steigernde Maßnahmen kann abhängig sein von dem Beladungszustand des Partikelfilters 7 gewählt werden. Mit zunehmender Last nehmen die NO-Rohemissionen, aber auch der absolute Anstieg der NO-Emissionen durch NO-steigernde Maßnahmen überproportional zu, während im Leerlauf bei einer Verdoppelung der NO-Rohemissionen das NO₂-Angebot vor dem Partikelfilter 7 um 2 bis 8 g/h erhöht werden kann, ist bei Mitteldrücken um 6 bar bereits mit 20 bis 100 g/h NO-Mehremissionen zu rechnen, so daß die Rücknahme der Partikelmasse im Partikelfilter 7 entsprechend schneller ablaufen kann. Hinzu kommt, daß bei höheren Motorlasten üblicherweise auch höhere Abgastemperaturen vorliegen, so daß die Gefahr des Unterschreitens einer Anspringtemperatur des Partikelminderungssystems von 200 ° C geringer ist.

Es kann somit beispielsweise vorgeschlagen werden, bei gespeicherten Partikelmassen bis 5 Gramm erst ab 6 bar Mitteldruck NO-steigernde Maßnahmen einzusetzen, während mit zunehmender Beladung der Schwellwert um 1 bar pro 5 Gramm eingelagerter Partikelmasse abnimmt. Selbstverständlich sind aber fahrzeug- und motorabhängig auch Abweichungen möglich.

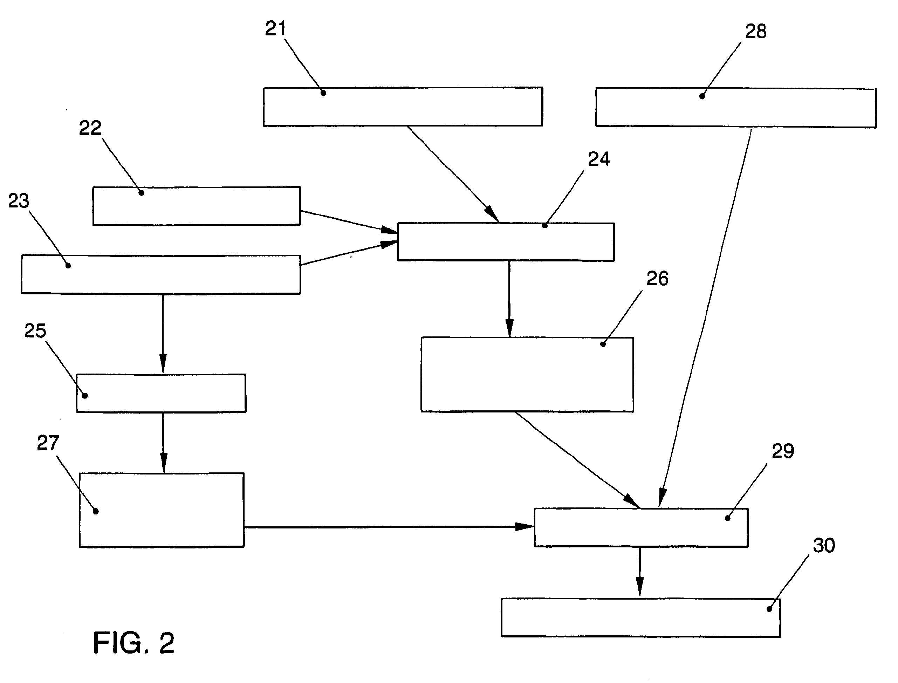

Fig. 2 zeigt eine Modellierung der Partikelspeicherung. Ein in einem entsprechenden Speicher der Motorsteuerung abgespeichertes Kennfeld 21 der NO-Rohemission, der Abgasmassenstrom 22 sowie die Temperatur 23 des Vorkatalysators beeinflussen die Rate 24 der Umwandlung von NO → NO₂. Ferner geht die Temperatur 23 des Vorkatalysators in ein Vorrohrmodell 25 ein, woraus sich die Temperatur 27 am Partikelfilter ergibt. Die bereits erwähnte Umwandlungsrate 24 bestimmt die tatsächliche NO₂-Emission 26 vor dem Partikelfilter. Der Partikelumsatz 29 im Partikelfilter wird von der Temperatur 27 am Partikelfilter, der NO₂-Emission 26 vor dem Partikelfilter sowie einem Kennfeld 28 Partikelemissionen beeinflußt.. Der Partikelumsatz 29 schließlich bestimmt die eingelagerte Partikelmasse 30. Ein entsprechendes Modell läßt sich daher aus dem geschilderten Zusammenhang aufstellen.

### BEZUGSZEICHENLISTE

- 1: Brennkraftmaschine
- 2: Luftansaugleitung
- 3: Abgasleitung
- 4: Einspritzvorrichtung
- 5: Strömungsrichtung
- 6: Oxidationskatalysator
- 7: Partikelfilter
- 8: Gehäuse
- 11: Abgasrückvorrichtung
- 11a: Rückführleitung
- 12: Abgasdrossel
- 13: Drosselklappe
- 14: Steuereinrichtung
- 15: Turbolader
- 16: Temperatursensor
- 16a: Signalleitung
- 17: Gasdrucksensor
- 17a: Signalleitung
- 17b: Meßvorrichtung
- 18: Hitzdraht
- 18a: Signalleitung
- 21: Kennfeld NO-Rohemission
- 22: Abgasmassenstrom
- 23: Temperatur-Vorkatalysator
- 24: NO→NO₂-Bildung
- 25: Vorrohrmodell
- 26: NO₂-Emission vor Partikelfilter
- 27: Temperatur am Partikelfilter
- 28: Kennfeld Partikelemission
- 29: Partikelumsatz
- 30: Eingelagerte Partikelmasse

## Patentansprüche

1. Verfahren zum Betreiben einer kontinuierlich reduzierenden Partikelminderungsvorrichtung einer Brennkraftmaschine (1), insbesondere einer Diesel-Brennkraftmaschine, die in einer Abgasleitung (3) in Strömungsrichtung (5) hintereinander einen Oxidationskatalysator (6) und nachfolgend einen Partikelfilter (7) aufweist, **dadurch gekennzeichnet, daß** der NOx-Anteil des Abgases angehoben wird, wenn der Partikelfilter (7) eine vorbestimmte obere Schwelle der Beladung überschreitet.

2. Verfahren nach Anspruch 1, **dadurch gekennzeichnet, daß** der NOx-Anteil des Abgases nach Unterschreiten einer vorbestimmten untere Schwelle der Beladung abgesenkt wird.

3. Verfahren nach Anspruch 1 oder 2, **dadurch gekennzeichnet, daß** der Beladungszustand des Partikelfilters (7) durch Messung des Abgasgegendrucks über einen Gasdrucksensor erfolgt.

4. Verfahren nach Anspruch 1 oder 2, **dadurch gekennzeichnet, daß** der Beladungszustand des Partikelfilters (7) durch Messung der Frischluftmasse bei geöffnetem EGR-Ventil erfolgt.

5. Verfahren nach Anspruch 1 oder 2, **dadurch gekennzeichnet, daß** der Beladungszustand des Partikelfilters (7) aus Kennfeldern der Ruß- und NOx-Emissionen der Brennkraftmaschine sowie einem Modell der Partikelumsetzung des Partkelminderungssystems bestimmt wird.

6. Verfahren nach einem der vorangegangenen Ansprüche, **dadurch gekennzeichnet, daß** die Erhöhung des NOx-Anteils des Abgases durch Absenkung der EGR-Rate und/oder Vorverlagerung des Spritzbeginns der Haupteinspritzung und/oder durch Änderung der Menge und des Beginns der Voreinspritzung erfolgt.

7. Verfahren nach einem der vorangegangenen Ansprüche, **dadurch gekennzeichnet, daß** die obere Schwelle eine Funktion des Beladungszustands des Partikelfilters (7) ist.

8. Vorrichtung zur Durchführung des Verfahrens nach einem der vorangegangenen Ansprüche, **dadurch gekennzeichnet, daß** die Vorrichtung eine Steuervorrichtung (14) aufweist.

9. Vorrichtung nach Anspruch 8, **dadurch gekennzeichnet, daß** die Steuervorrichtung (1) die NOx-Rate des Abgases (19) durch eine von der Steuereinrichtung (14) einstellbare Abgasrückführvorrichtung (11) bestimmt.

10. Vorrichtung nach Anspruch 8 oder 9, **dadurch gekennzeichnet, daß** die Vorrichtung eine Meßvorrichtung zum Bestimmen des Grads der Beladung des Partikelfilters (7) aufweist.

11. Vorrichtung nach Anspruch 10, **dadurch gekennzeichnet, daß** die Meßvorrichtung (17b) den Druck im Abgas vor dem Partikelfilter (7) ermittelt.

12. Vorrichtung nach Anspruch 11, **dadurch gekennzeichnet, daß** die Meßvorrichtung (17b) einen Drucksensor (17) aufweist, der in der Abgasleitung (3) vor dem Partikelfilter (7) angeordnet ist und der beim Erreichen des bestimmten Beladungsgrades ein Signal über eine Signalleitung an die Steuereinrichtung (14) abgibt.

13. Vorrichtung nach Anspruch 10, **dadurch gekennzeichnet, daß** die Meßvorrichtung (17b) einen Frischluftmassenmesser (18) aufweist, dessen Meßsignale der Steuereinrichtung (14) durch eine Signalleitung (18a) übermittelt werden.

14. Vorrichtung nach Anspruch 10, **dadurch gekennzeichnet, daß** in der Abgasleitung (3) ein Temperatursensor (16) vorzugsweise in der Strömungsrichtung (5) vor dem Oxidationskatalysator (6) angeordnet ist, dessen Meßsignale der Steuervorrichtung (14) über eine Signalleitung (16a) übermittelt werden.

15. Vorrichtung nach einem der Ansprüche 8 - 14, **dadurch gekennzeichnet, daß** an die Abgasleitung (3) vor dem Oxidationskatalysator (6) und vorzugsweise vor dem Gasdrucksensor (17) ein Turbolader (15) mit einem Ladedrucksteller angeschlossen ist, wobei der Ladedrucksteller durch eine Steuerleitung (15a) mit der Steuereinrichtung (14) verbunden ist.

## Claims

1. Method for the operation of a continuously reducing particulate reduction device of an internal combustion engine (1), in particular a diesel internal combustion engine, the device comprising an oxidation catalytic converter (6) followed by a particle filter (7) arranged one behind the other in the direction of flow (5) in an exhaust line (3), **characterized in that** the NOx fraction of the exhaust gas is raised when the particle filter (7) exceeds a predetermined upper load threshold.

2. Method according to Claim 1, **characterized in that** the NOx fraction of the exhaust gas is reduced once the load falls below a predetermined lower load threshold.

3. Method according to Claim 1 or 2, **characterized in that** the load condition of the particle filter (7) is determined through measurement of the exhaust gas back pressure by means of a gas pressure sensor.

4. Method according to Claim 1 or 2, **characterized in that** the load condition of the particle filter (7) is determined through measurement of the fresh air mass with the EGR valve opened.

5. Method according to Claim 1 or 2, **characterized in that** the load condition of the particle filter (7) is determined from characteristics maps of the soot and NOx emissions from the internal combustion engine and a particulate conversion model of the particulate reduction system.

6. Method according to any one of the preceding Claims, **characterized in that** the NOx fraction of the exhaust gas is increased by reducing the EGR rate and/or advancing the start of the main injection and/or by adjusting the quantity and the start of the pilot injection.

7. Method according to any one of the preceding Claims, **characterized in that** the upper threshold is a function of the load condition of the particle filter (7).

8. Device for performing the method according to any one of the preceding Claims, **characterized in that** the device has a control device (14).

9. Device according to Claim 8, **characterized in that** the control device (1) determines the NOx rate of the exhaust gas (19) be means of an exhaust gas recirculation device (11) that can be adjusted by the control device (14).

10. Device according to Claim 8 or 9, **characterized in that** the device has a measuring device for determining the degree of loading of the particle filter (7).

11. Device according to Claim 10, **characterized in that** the measuring device (17b) determines the pressure in the exhaust gas upstream of the particle filter (7).

12. Device according to Claim 11, **characterized in that** the measuring device (17b) has a pressure sensor (17), which is arranged in the exhaust line (3) upstream of the particle filter (7) and which on attainment of the specific degree of loading delivers a signal to the control device (14) via a signal lead.

13. Device according to Claim 10, **characterized in that** the measuring device (17b) has a fresh air mass flow sensor (18), the measuring signals from which are relayed to the control device (14) through a signal lead (18a).

14. Device according to Claim 10, **characterized in that** a temperature sensor (16) is arranged in the exhaust line (3), preferably upstream of the oxidation catalytic converter (6) in the direction of flow (5), the measuring signals from the sensor being relayed to the control device (14) via a signal lead (16a).

15. Device according to any one of Claims 8 to 14, **characterized in that** a turbocharger (15) having a boost pressure regulator is connected to the exhaust line (3) upstream of the oxidation catalytic converter (6) and preferably upstream of the gas pressure sensor (17), the boost pressure regulator being connected to the control device (14) by a control lead (15a).

## Revendications

1. Procédé pour faire fonctionner un dispositif de diminution de particules réduisant en continu d'un moteur à combustion interne (1), en particulier un moteur à combustion interne de type diesel, lequel présente un convertisseur catalytique à oxydation (6) et un filtre à particules (7) disposés dans une conduite de gaz d'échappement (3) l'un derrière l'autre dans le sens d'écoulement (5), **caractérisé en ce que** la part de NOx des gaz d'échappement est augmentée lorsque le filtre à particules (7) dépasse un seuil supérieur prédéfini de la charge.

2. Procédé selon la revendication 1, **caractérisé en ce que** la part de NOx des gaz d'échappement est abaissée après passage au-dessous d'un seuil inférieur prédéfini de la charge.

3. Procédé selon la revendication 1 ou 2, **caractérisé en ce que** l'état de charge du filtre à particules (7) est déterminé par mesure de la contre-pression des gaz d'échappement par l'intermédiaire d'un capteur de pression de gaz.

4. Procédé selon la revendication 1 ou 2, **caractérisé en ce que** l'état de charge du filtre à particules (7) est déterminé par mesure de la masse d'air frais lorsque la soupape de recirculation des gaz d'échappement est ouverte.

5. Procédé selon la revendication 1 ou 2, **caractérisé en ce que** l'état de charge du filtre à particules (7) est déterminé à partir de champs caractéristiques des émissions de suie et de NOx du moteur à combustion interne ainsi que d'un modèle de conversion de particules du système de diminution de particules.

6. Procédé selon l'une quelconque des revendications précédentes, **caractérisé en ce que** l'augmentation de la part de NOx des gaz d'échappement a lieu par abaissement du taux de recirculation des gaz d'échappement et/ou prédécalage du début d'injection de l'injection principale et/ou par changement de la quantité et du début de la préinjection.

7. Procédé selon l'une quelconque des revendications précédentes, **caractérisé en ce que** le seuil supérieur est une fonction de l'état de charge du filtre à particules (7).

8. Dispositif pour la mise en oeuvre du procédé selon l'une quelconque des revendications précédentes, **caractérisé en ce que** le dispositif présente un dispositif de commande (14).

9. Dispositif selon la revendication 8, **caractérisé en ce que** le dispositif de commande (14) détermine le taux de NOx des gaz d'échappement (19) par l'intermédiaire d'un dispositif de recirculation des gaz d'échappement (11) réglable par le dispositif de commande (14).

10. Dispositif selon la revendication 8 ou 9, **caractérisé en ce que** le dispositif présente un dispositif de mesure pour déterminer le degré de charge du filtre à particules (7).

11. Dispositif selon la revendication 10, **caractérisé en ce que** le dispositif de mesure (17b) détecte la pression dans les gaz d'échappement en amont du filtre à particules (7).

12. Dispositif selon la revendication 11, **caractérisé en ce que** le dispositif de mesure (17b) présente un capteur de pression (17), lequel est disposé dans la conduite de gaz d'échappement (3) en amont du filtre à particules (7) et transmet, par l'intermédiaire d'une ligne de signaux, un signal au dispositif de commande (14) lorsque le degré de charge défini est atteint.

13. Dispositif selon la revendication 10, **caractérisé en ce que** le dispositif de mesure (17b) présente un mesureur de masse d'air frais (18), dont les signaux de mesure sont transmis au dispositif de commande (14) par l'intermédiaire d'une ligne de signaux (18a).

14. Dispositif selon la revendication 10, **caractérisé en ce qu'**un capteur de température (16), dont les signaux de mesure sont transmis au dispositif de commande (14) par l'intermédiaire d'une ligne de signaux (16a), est disposé dans la conduite de gaz d'échappement (3), de préférence dans le sens d'écoulement (5), en amont du convertisseur catalytique à oxydation (6).

15. Dispositif selon l'une quelconque des revendications 8 à 14, **caractérisé en ce qu'**un turbocompresseur à suralimentation (15) comportant un régulateur de pression de charge est raccordé à la conduite de gaz d'échappement (3) en amont du convertisseur catalytique à oxydation (6) et de préférence en amont du capteur de pression de gaz (17), le régulateur de pression de charge étant relié au dispositif de commande (14) par l'intermédiaire d'une ligne de commande (15a).
